# EUROPEAN PATENT APPLICATION

(11) **EP 1 696 298 A2**
(43) Date of publication of application: **30.08.2006**
(21) Application number: 06290217.6
(22) Date of filing: 07.02.2006
(51) Int. Cl.: G05D 1/02

(54) **Robot cleaner and a method for controlling the same**

(30) Priority: 25.02.2005 KR 2005015776
(71) Applicant: Samsung Gwangju Electronics Co., Ltd., Gwangju-city (KR)
(72) Inventor: Lee, Ju-sang, Gwangsan-gu Gwangju-city (KR); Ko, Jang-youn, Gwangsan-gu Gwangju-city (KR); Song, Jeong-gon, Gwangsan-gu Gwangju-city (KR); Lim, Kwang-soo, Geumcheon-gu Seoul (KR); Kim, Ki-man, Gwangsan-gu Gwangju-city (KR); Jeung, Sam-jong, Gwangsan-gu Gwangju-city (KR)
(74) Representative: Blot, Philippe Robert Emile

(57) **Abstract**

A robot cleaner (10) that includes a driving unit (18) for driving a plurality of wheels, a transmitter/receiver (17) for communicating with an external charger (20), and a controller (30) for controlling the driving unit. The controller controls the transmitter/receiver to communicate with the external charger while traveling an area to be cleaned and stores at least one location of communication in a memory. The controller further controls the driving unit to cause the robot cleaner to travel to the external charger using at least one location of communication.

## Description

### CROSS-REFERENCE TO RELATED APPLICATIONS

This application claims the benefit of priority under 35 U.S.C. § 119 to Korean Patent Application No. 2005-15776, filed February 25, 2005, the entire contents of which are incorporated herein by reference. This application may also be related to commonly owned U.S. Patent Application No. 10/682,484, filed October 10, 2003, the entire contents of which are incorporated herein by reference.

### BACKGROUND OF THE INVENTION

### Field of the Invention

The present invention relates to a robot cleaner and a method for locating an external charger.

### Description of the Related Art

Generally, a robot cleaner is an unmanned automatic cleaning device, which travels an area being cleaned and draws in foreign substances, such as dust and/or debris, from a surface being cleaned.

When a battery shortage is detected by a controller during cleaning, the robot cleaner attempts to communicate with an external charger. However, when failing to communicate with the external charger due to obstacles (e.g., furniture and walls), the robot cleaner cannot immediately return to the external charger to charge the battery. Instead the robot cleaner moves along the wall of the area being cleaned or travels the area being cleaned at random, for example, in an attempt to communicate with the external charger.

The robot cleaner may be unable to reach the charger, due to complete exhaustion of remaining battery power caused by the robot cleaner's unnecessary travel to find the external charger after detecting a battery shortage.

### SUMMARY OF THE INVENTION

An aspect of the present invention is to solve at least the above problems and/or disadvantages and to provide at least the advantages described below. Accordingly, an aspect of the present invention is to provide a robot cleaner and a method for locating an external charger to make an improved performance in order for the robot cleaner to promptly detect and return to the external charger.

To this end, one non-limiting aspect of the present invention provides a robot cleaner including: driving means for driving a plurality of wheels; transmitting/receiving means for communicating with an external charger; and a controller for controlling the driving means, wherein the controller controls the transmitting/receiving means to communicate with the external charger while traveling an area to be cleaned and stores at least one location of communication in a memory, the controller further controlling the driving means to return to the external charger using at least one location of communication.

Another non-limiting aspect of the present invention provides a method for controlling the robot cleaner, the method including: traveling an area to be cleaned; communicating with an external charger while traveling the area to be cleaned; and memorizing at least one communication location where communication occurred with the external charger.

### BRIEF DESCRIPTION OF THE DRAWINGS

The above aspects and other features of the present invention will become more apparent by describing in detail exemplary embodiments thereof with reference to the attached drawing figures, wherein:

FIG. 1 is a perspective view showing a robot cleaner according to a non-limiting embodiment of the present invention;

FIG. 2 is a block diagram of a non-limiting configuration of the robot cleaner according to an embodiment of the present invention;

FIG. 3 is a flowchart illustrating a method of controlling the robot cleaner according to a non-limiting embodiment of the present invention; and

FIG. 4 is a view schematically showing the operation of the robot cleaner according to another non-limiting embodiment of the present invention.

### DETAILED DESCRIPTION OF THE EMBODIMENTS

Hereinafter, non-limiting embodiments of the present invention will be described in detail with reference to the accompanying drawings. In the following description, like reference numerals are used for like elements throughout the drawings. Also, well-known functions and configurations are not described in detail, since they may obscure the invention.

By way of explanation, the robot cleaner 10 including a distance sensor 16 or an imaging unit may not only measure the distance to obstacles on the surface being cleaned, including walls, but may also detect obstacles in order to help avoid any possible collisions or blocking during cleaning.

The robot cleaner 10 may include a left driving wheel, a right driving wheel, and an end driving wheel, each being connected to a driving motor on a lower part of a cleaner. The driving motor may be controlled by a controller 30 and is capable of changing a direction of the cleaner, as well as a driving speed.

A suction port capable of inhaling dust or other contaminants may be provided on the lower part of the cleaner. A suction force of the suction port may be generated by the suction motor 19 separately provided on the cleaner. The suction port may be connected to a separate dust collecting chamber in the cleaner and thus is capable of collecting dust or contaminants from the inhaled air.

The cleaner travels detected traveling patterns of the surface or a predetermined traveling route for cleaning the area to be cleaned. As such, while the robot cleaner travels the area for cleaning and cleans, the controller checks a battery capacity to determine whether there is a battery power shortage. If the controller determines that the battery should be charged, the robot cleaner may find and move toward the location of the external charger by communicating with the external charger. In other words, the robot cleaner 10 may exchange signals with the charging device to find the position of the external charger and the controller drives the driving motor to move the cleaner toward the external charger 20. A connection terminal on the robot cleaner 10 may be connected to a charging terminal on the external charger. When the charging terminal and connection terminal are connected to each other, the controller charges (in charge mode) until the battery power becomes fully charged. During charging, other operations of the robot cleaner 10 may be halted. For example, the driving mode and/or the cleaning mode may be disabled during charging.

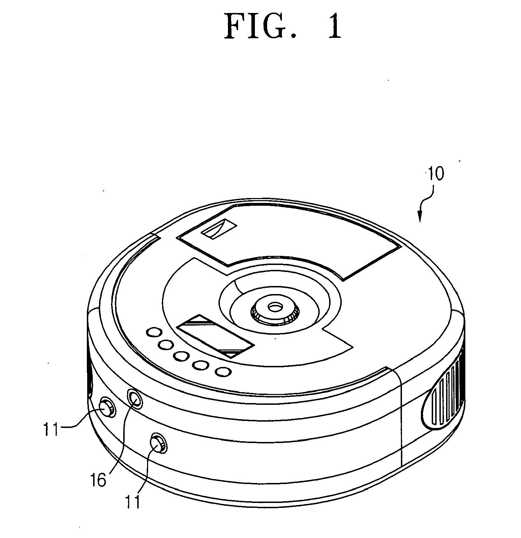

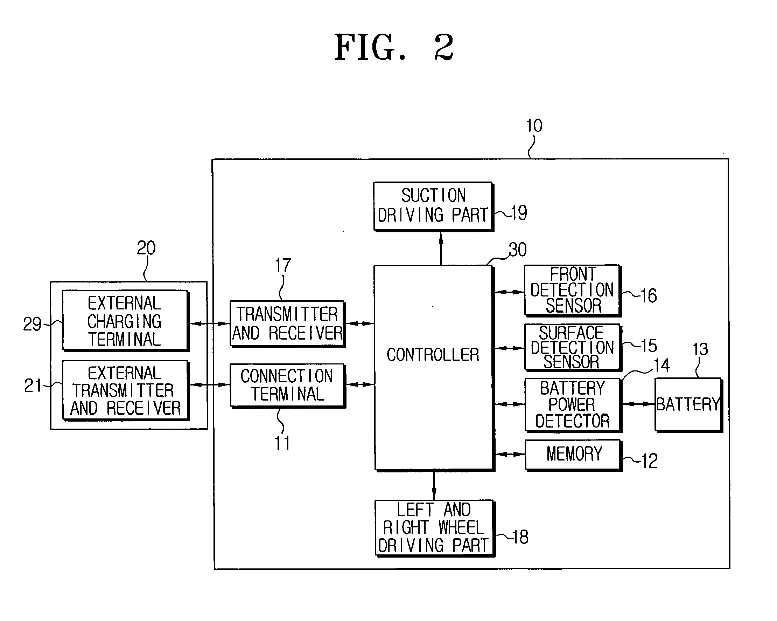

Referring to FIGS. 1 and 2, a robot cleaner 10 according to a non-limiting aspect of the present invention will be described. A charging terminal may be exposed outside the robot cleaner 10. The charging terminal may be prepared at a position and height corresponding to a charging terminal 29 of a separately provided external charger 20.

The robot cleaner 10 may include a memory 12, a battery 13, a battery power detector 14, a surface detection sensor 15, a front detection sensor 16, a transmitter/receiver 17, a left and right wheel driving part 18, and the controller 30.

The memory 12 may store several pieces of data, such as a cleaning time, an area to be cleaned, and/or a cleaning pattern, as well as other information. This data is useful for the controller 30 to automatically control the robot cleaner. Also, additional desired data may be stored as it is created or obtained during cleaning.

The battery 13 provides driving power and a certain amount of power in reserve. When the battery power is consumed below a predetermined level, the robot cleaner 10 may return to the external charger 20 to recharge the battery 13.

The battery power detector 14 may frequently check the level of power available in the battery 13 and may send a battery charge request signal to the controller 30 when the available battery power falls below a predetermined level.

The surface detection sensor 15 may be positioned at a lower part of the robot cleaner 10 and may be configured to face the surface being cleaned. The surface detection sensor 15 is able to measure a distance from the surface being cleaned. The surface detection sensor 15 can also detect marks prepared as a predetermined pattern on the surface being cleaned. In other words, the surface detection sensor 15 can detect a traveling map. Accordingly, the surface detection sensor 15 may be used to confirm the area to be cleaned and/or a traveling route. The surface detection sensor may be either a light receiving/transmitting sensor or a photosensor, as non-limiting examples.

The front detection sensor 16 may be prepared at a side of the robot cleaner 10, preferably at a front where the connection terminal 11 is located. The front detection sensor 16 is used to detect any possible obstacle (including walls) in front of or in a traveling direction of the robot cleaner. The front detection sensor 16 may be further configured to measure the distance to the obstacle. The front detection sensor 16 may be a light receiving/emitting sensor, as a non-limiting example. When the robot cleaner 10 approaches the external charger 20 to perform a charging mode, the robot cleaner 10 may detect predetermined recognition marks at the external charger 20 and may measure the distance between the recognition marks and the robot cleaner 10.

The transmitter/receiver 17 may exchange signals with an external transmitter/receiver 29 of the external charger in wireless communication. During the operation of the robot cleaner 10 under the control of the controller 30, the transmitter/receiver 17 may attempt to communicate with the external charger 20 at a predetermined time interval and/or at a predetermined traveling distance, for example. Accordingly, the transmitter/receiver 17 may locate the external charger by communicating with an external transmitter/receiver 29 provided at the external charger to locate the position of the external charger. Also, the transmitter/receiver 17 may transmit and/or receive signals to/from a remote controller operated by a user or a separate central remote controller. In other words, the robot cleaner 10 may be remotely controlled. Signals detected at each sensor 15, 16 may be sent to the controller 30, which controls the robot cleaner 10 accordingly.

A suction driving part 19 provides a suction force to clean the surface being cleaned. The suction driving part 19 may include a suction motor and a dust separation filter. The dust collection filter may be a general dust bag or a cyclone dust separation unit, as non-limiting examples.

The left and right wheel driving part 18 drives left and right wheels provided at the lower part of the robot cleaner 10. The left and right wheel driving part 18 may be controlled by the controller 30. The left and right wheel driving part 18 may include a stepping motor connected to each wheel, for example.

The controller 30 controls the driving operation and movements of the robot cleaner 10. In particular, according to a non-limiting embodiment of the present invention, while traveling the area being cleaned, the controller 30 may create a traveling map based on a driving control signal of the driving part 18. The traveling map may be created based on a traveling distance and direction and stores the map at the memory 12. The controller 30 may control the transmitter/receiver 17 to attempt periodic communication with the external charger 20 and may recognize the communication points between the transmitter/receiver 17 and the external charger 20. When a communication point is recognized, the controller 30 may mark the communication points on the traveling map memorized in the memory 12.

If a traveling pattern is marked on the surface being cleaned, the controller 30 may detect the traveling pattern using the surface detection sensor 15 and may store the detected pattern in the memory 12. The controller 30 may detect and mark all the communication points, so that communication points can be marked on the traveling pattern stored in the memory 12. If there is a battery charge request signal as described above, the controller 30 may control the driving part 18 to locate the external charger 20 using data stored in the memory 12.

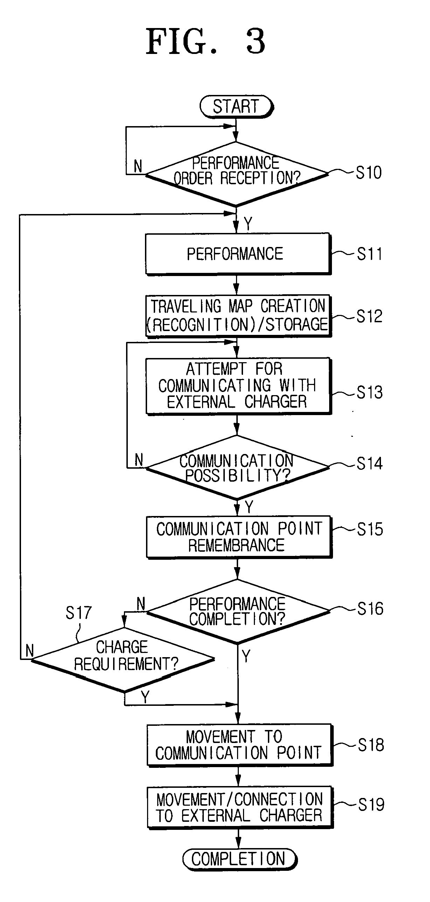

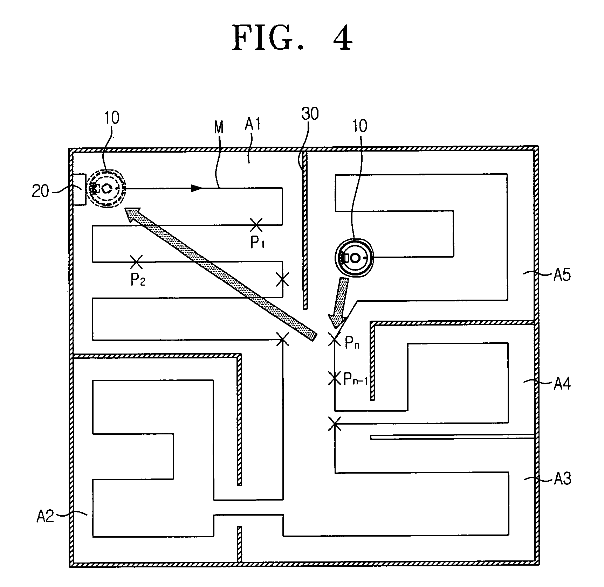

FIGS. 3 and 4 illustrate a non-limiting method for controlling the robot cleaner according to another non-limiting embodiment of the present invention. In the following description, the robot cleaner 10 connected to the external charger 20 in a waiting mode is established as an initial setting.

First, the controller 30 determines if an operation command is input from the outside (S10). When a command is determined to have been input, the requested operation is performed (S11). That is, if a cleaning command is received, the robot cleaner 10 may be separated from the external charger 20. The controller 30 then may control the suction driving part 19 and the driving part 18 to drive and clean areas to be cleaned (A1-A5) in a predetermined order.

When the robot cleaner 10 travels to clean the areas to be cleaned (A1-A5), the controller 30 may create a traveling map (M) based on at least one of the traveling distance and/or the traveling direction, and may store it in the memory 12 (S12). Whenever the robot cleaner 10 travels each area to be cleaned (A1-A5), the traveling map (M) may continue to be updated and stored.

As shown above, when the robot cleaner 10 moves and cleans, the controller 30 may control the transmitter/receiver 17 to attempt communication with the external charger 20 (S13). In other words, the controller 30 may control the robot cleaner 10 to attempt to communicate with the external charger 20 at a predetermined traveling distance and/or a predetermined time interval.

The controller 30 determines whether the communication succeeds (S 14). If the communication does not succeed, the controller 30 may control the robot cleaner to keep attempting communication with the external charger 30.

On the other hand, if it is determined that the communication with the transmitter/receiver 17 is successful, the controller 30 may memorize the communication point P1 on the traveling map (S 15). As shown above, if communication with the external charger 20 is performed on a regular basis while the robot cleaner 10 is traveling, the communication points recognized each time (P1-Pn) may be marked on the traveling map (M) stored in the memory 12 by the controller 30. The controller 30 may then determine whether the operation is completed (S16).

If it is determined that the operation is not completed (S16), the controller 30 may determine whether or not the battery needs to be charged (S17). Therefore, in S 17, the battery power detector 14 may frequently check the battery power availability 13 and may transmit a result to the controller 30. If it is determined that the battery needs to be charged (S 17), the robot cleaner 10 may be driven to stop the operation and to locate and return to the external charger 20.

As another non-limiting example, the robot cleaner 10 may be located within the area being cleaned (A5). In this case, the robot cleaner 10 may not be able to directly communicate with the external charger 20. As a result, the controller 30 may control the driving part 18 to locate and move to one of communication points (P1-Pn) marked on the traveling map (M) stored in the memory 12 (S18). At this time, it is preferable for the robot cleaner to locate and move to the nearest communication point (Pn) from where the performance stops.

As described above, when the robot cleaner 10 moves to the communication point (Pn), it may communicate with the external charger 20. Accordingly, after moving to the communication point (Pn), the robot cleaner 10 may communicate with the external charger 20 and may move and connect to the external charger 20 (S 19).

As described above, the robot cleaner 10 may start from the communication point (Pn), and thus may move as quickly as possible to be connected to the external charger 20. Accordingly, it is possible to prevent the robot cleaner 10 from stopping due to battery power exhaustion while returning to the external charger 20.

As can be appreciated from the above description, according to a robot cleaner 10 and a method for controlling the same according to non-limiting embodiments of the present invention, a position where the robot cleaner 10 may communicate with the external charger 20 may be guaranteed, so that the robot cleaner may return to the charging location.

Therefore, after moving to a position at which it can communicate with the external charger 20, the robot cleaner 10 can promptly move to the external charger 20 through communication. As a result, the operation of the robot cleaner 10 is smoothly performed, thereby preventing it from stopping due to battery power exhaustion.

While the invention has been shown and described with reference to certain embodiments thereof, it will be understood by those skilled in the art that various changes in form and details may be made therein without departing from the spirit and scope of the invention as defined by the appended claims.

## Claims

1. A robot cleaner, comprising:
driving means for driving a plurality of wheels;
transmitting/receiving means for communicating with an external charger; and
a controller for controlling the driving means,
wherein the controller controls the transmitting/receiving means to communicate with the external charger while traveling an area to be cleaned and stores at least one communication location in a memory, the controller further controlling the driving means to cause the robot cleaner to travel to the external charger using the at least one communication location, and
wherein the at least one communication location represents a location at which successful communication occurred between the transmitting/receiving means and the external charger.

2. The robot cleaner of claim 1, wherein the controller is configured to create a traveling map based at least in part on at least one of a traveling distance and a traveling direction.

3. The robot cleaner of claim 2, wherein the controller is configured to create the traveling map by marking the at least one communication location on the traveling map.

4. The robot cleaner of any of claims 1 to 3, further comprising:
means for detecting a traveling pattern on a surface of the area to be cleaned,
wherein the controller is configured to mark information about the at least one communication location on the traveling pattern.

5. The robot cleaner of any of claims 1 to 4, further comprising:
a battery; and
a battery power detector configured to detect a power level of the battery and to generate a charge request if the detected power level is lower than a predetermined threshold,
wherein the controller is configured to control the driving means to cause the robot cleaner to travel to the external charger via the at least one communication location when the controller detects the charge request.

6. The robot cleaner of any of claims 1 to 5, wherein the controller is configured to control the driving means to cause the robot cleaner to travel to the external charger when cleaning is completed.

7. A method of controlling a robot cleaner, the method comprising:
traveling an area to be cleaned;
communicating with an external charger during the traveling; and
memorizing at least one communication location where successful communication occurred with the external charger.

8. The method of claim 7, further comprising:
detecting a power level of a battery;
generating a charge request if the detected power level is low; and
returning to the external charger when the charge request is detected.

9. The method of claim 8, wherein the returning includes traveling to the at least one communication location and then returning to the external charger.

10. The method of any of claims 7 to 9, wherein the memorizing includes:
creating a traveling map based at least in part on at least one of a traveling distance and a traveling direction;
storing the traveling map.

11. The method of claim 10, wherein the memorizing further includes marking the at least one communication location on the traveling map.

12. The method of any of claims 7 to 11, wherein the memorizing includes:
recognizing a traveling pattern provided on a surface of the area to be cleaned; and
marking the at least one communication location on the traveling pattern.

13. The method of any of claims 7 to 12, wherein the communicating is repeated at at least one of a predetermined distance interval or a predetermined time interval.

14. A robot cleaner, comprising:
a motor configured to drive at least one wheel;
a transmitter/receiver configured to transmit signals to and receive signals from a charger;
a controller configured to control the motor and the transmitter/receiver,
wherein the controller controls the transmitter/receiver to communicate with the charger while traveling an area to be cleaned.

15. The robot cleaner of claim 14, wherein the controller is configured to store at least one communication location in a memory, the at least one communication location representing a location of successful communication between the transmitter/receiver and the charger.

16. The robot cleaner of any of claims 14 to 15, wherein the controller is configured to create a traveling map based at least in part on at least one of a traveling distance or a traveling direction.

17. The robot cleaner of claim 16, wherein the controller is configured to mark at least one communication location on the traveling map, the at least one communication location representing a location of successful communication between the transmitter/receiver and the charger.

18. The robot cleaner of any of claims 14 to 17, further comprising:
a sensor configured to detect a traveling pattern on a surface of the area to be cleaned.

19. The robot cleaner of claim 18, wherein the controller is configured to mark at least one communication location on the detected traveling pattern, the at least one communication location representing a location of successful communication between the transmitter/receiver and the charger.

20. The robot cleaner of any of claims 14 to 19, further comprising:
a battery; and
a battery power detector configured to detect a power level of the battery and to generate a charge request if the detected power level is low,
wherein the controller controls the motor to drive the at least one wheel to travel to the charger via at least one communication location when the controller detects the charge request, the at least one communication location representing a location of successful communication between the transmitter/receiver and the charger.
